# FASCICULE DE BREVET EUROPEEN

(11) **EP 3 084 235 B1**
(45) Date de publication et mention de la délivrance du brevet: **14.02.2018**
(21) Numéro de dépôt: 14812476.1
(22) Date de dépôt: 15.12.2014
(51) Int. Cl.: F16B 19/10, B25B 31/00

(54) **FIXATION TEMPORAIRE**
VORÜBERGEHENDE BEFESTIGUNG
TEMPORARY FASTENER

(30) Priorité: 16.12.2013 FR 1362690
(43) Date de publication de la demande: 26.10.2016
(73) Titulaire: Lisi Aerospace, 75583 Paris Cedex 12 (FR)
(72) Inventeur: BIGOT, Frédéric, F-36260 Reuilly (FR)
(74) Mandataire: Maupilier, Didier
(86) Numéro de dépôt international: PCT/EP2014/077720
(87) Numéro de publication internationale: WO 2015/091335

(56) Documents cités:
- FR-A1- 2 676 258
- US-A- 3 233 504
- US-A- 3 260 151

## Description

La présente invention se rapporte à des fixations temporaires, de type agrafes d'épinglage.

Dans l'industrie aéronautique, avant de réaliser l'assemblage définitif de tôles ou analogues, il est connu de procéder à un assemblage temporaire des tôles au moyen d'agrafes insérées dans des trous traversants.

De telles agrafes, par exemple décrites dans le document GB1327021 ou le document US3260151, comprennent typiquement :
- un corps pourvu d'une face d'appui susceptible de venir au contact d'une face avant des structures à assembler,
- au moins une pince destinée à traverser les perçages et pourvue d'un bec d'accrochage susceptible de s'appliquer contre une face arrière des structures à assembler,
- un mécanisme déplaçable par rapport au corps, le mécanisme comprenant une tige filetée disposée coaxialement au corps, une extrémité de la tige étant prolongée par la pince, le mécanisme comprenant en outre un écrou de commande monté sur une autre extrémité de la tige.

Ce mécanisme permet, par un premier déplacement de la tige filetée, de faire passer les becs d'une position « fermée » à une position « ouverte » telle que le diamètre extérieur formé soit alors supérieur au diamètre des trous traversés. Dans un second temps, le déplacement permet d'appliquer une tension dans les tôles entre les becs ouverts et la face d'appui du corps.

Ces agrafes sont généralement posées sur les tôles à l'aide d'un appareil moteur de type visseuse/dévisseuse, muni d'un outil dit « nez de pose ».

Afin d'automatiser l'installation des agrafes, il convient de permettre le déplacement automatique du nez de pose entre les différents trous des structures à assembler. Cependant, le nez de pose peut être gêné pour accéder à un trou situé entre des agrafes déjà installées, en raison de l'encombrement desdites agrafes. Il s'ensuit des dysfonctionnements qui nécessitent l'intervention d'un technicien et ralentissent la pose des agrafes.

En conséquence, la présente invention a pour but de fournir une agrafe de faible encombrement en diamètre et en hauteur, afin de faciliter l'utilisation d'outils automatiques d'installation.

L'invention se rapporte en effet à une fixation pour l'assemblage temporaire d'au moins deux structures préalablement percées, du type comprenant : un corps s'étendant selon un axe, ledit corps étant pourvu d'une face d'appui sensiblement perpendiculaire à l'axe, ladite face étant susceptible de venir au contact d'une face avant des structures à assembler ; un écarteur solidaire dudit corps ; deux demi-pinces élastiques destinées à traverser les perçages, chaque pince étant pourvue d'un bec d'accrochage susceptible de s'appliquer contre une face arrière des structures à assembler, l'écarteur étant situé entre les deux demi-pinces ; un mécanisme déplaçable par rapport au corps, ledit mécanisme comprenant une tige filetée disposée coaxialement au corps, une extrémité de ladite tige étant reliée aux demi-pinces, ledit mécanisme comprenant en outre un écrou de commande monté sur ladite tige ; l'écrou de commande comportant : un taraudage interne coopérant avec le filetage de la tige ; un filetage externe coopérant avec un taraudage interne du corps ; le filetage de la tige et le filetage de l'écrou étant de pas inversés.

Par les pas inversés des filetages, on entend que les filetages de la tige filetée et de l'écrou forment des hélices enroulées autour de l'axe de la fixation, selon des sens de rotation opposés.

L'inversion des pas a pour fonction de permettre l'assemblage du corps et de l'écrou de commande lors de la fabrication de la fixation, d'assurer la traction de la tige de traction lors de la pose de l'agrafe, d'arrêter l'écrou en translation pendant la dépose de l'agrafe et éviter ainsi que l'écrou ne sorte du corps. La combinaison de filetage de l'écrou et du taraudage du corps remplace un élément d'arrêt et permet une réduction globale du diamètre de l'agrafe par rapport à d'autres dispositifs connus, en déportant la fonction d'arrêt de l'écrou sur le corps de l'agrafe.

De manière préférentielle, une extrémité de l'écrou est munie d'une portion d'entraînement apte à coopérer avec un outil d'installation pour un entraînement en rotation.

Plus préférentiellement, le filetage de l'écrou est disposé sur le pourtour cylindrique extérieur d'une extrémité de l'écrou formant butée, ladite extrémité étant opposée à la portion d'entrainement.

De manière préférentielle, le taraudage du corps est disposé sur le pourtour cylindrique intérieur d'une extrémité opposée à la face d'appui.

De manière préférentielle, l'écrou comporte une portion médiane dont un diamètre extérieur est inférieur au plus petit diamètre du taraudage du corps.

De manière préférentielle, des rondelles ressort sont disposées dans le corps entre une surface intérieure dudit corps, disposée sensiblement perpendiculairement à l'axe, et la butée de l'écrou.

L'invention se rapporte également à un procédé d'assemblage temporaire d'au moins deux structures préalablement percées, comprenant les étapes suivantes :
- une fixation telle que décrite ci-dessus est installée sur un automate de pose,
- ledit automate insère les deux demi-pinces élastiques dans un perçage des structures à assembler,
- un outil d'entraînement de l'automate entraîne en rotation l'écrou de commande.

L'installation automatisée est particulièrement favorisées par les dimensions de l'agrafe selon l'invention.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 : une vue éclatée d'une fixation temporaire de type agrafe d'épinglage selon un mode de réalisation de l'invention. ;
- Figure 2 : une vue en coupe de l'agrafe de la figure 1 au début d'un procédé d'installation selon un mode de réalisation de l'invention ;
- Figure 3 : une vue en coupe de l'agrafe de la figure 1 au cours d'un procédé d'installation selon un mode de réalisation de l'invention ;
- Figure 4 : une vue en coupe de l'agrafe de la figure 1 à la fin d'un procédé d'installation selon un mode de réalisation de l'invention ;
- Figure 5 : une vue en coupe d'une fixation temporaire de type agrafe d'épinglage selon un autre mode de réalisation de l'invention.

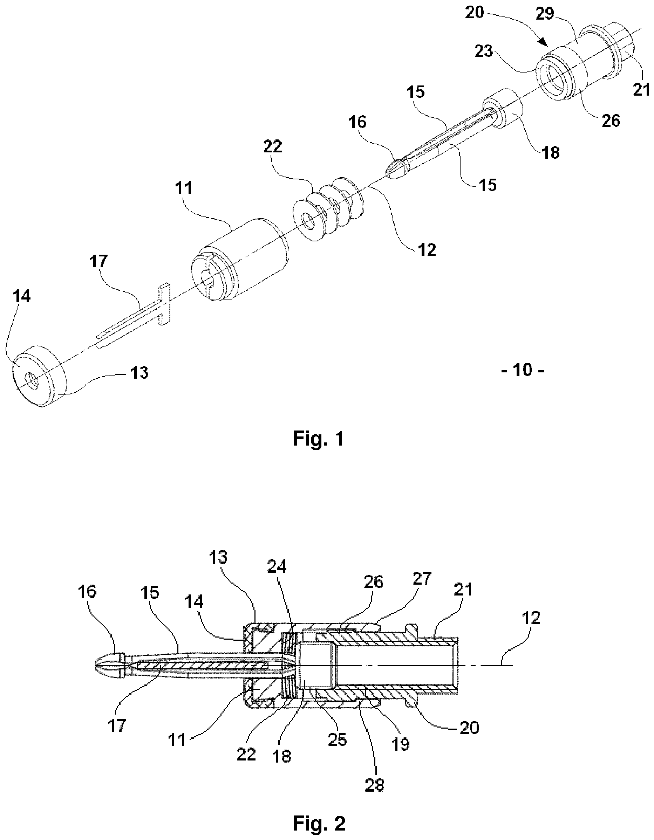

La figure 1 montre une vue éclatée d'une fixation temporaire de type agrafe d'épinglage selon un mode de réalisation de l'invention. La figure 2 montre une vue en coupe de la même agrafe assemblée.

L'agrafe 10 comporte un corps 11, sensiblement cylindrique et disposé selon un axe 12. Une extrémité du corps 11 selon ledit axe est pourvue d'un embout 13. Ledit embout comporte une face 14 d'appui, perpendiculaire à l'axe 12 et susceptible de venir au contact d'une face d'éléments à assembler, tels que des tôles percées.

L'agrafe 10 comporte également deux demi-pinces 15 allongées, pourvues chacune d'un bec 16 d'accrochage susceptible de s'appliquer contre une autre face des tôles à assembler, au travers des perçages alignés des tôles.

Un écarteur 17 sous la forme d'une tôle fixe est disposé entre les demi-pinces 15. L'écarteur a pour fonction de maintenir les becs écartés en position ouverte. Lorsque l'agrafe est en position « libre » ou « fermée », comme sur la figure 2, les demi-pinces 15 s'étendent hors du corps 11 de sorte que les becs 16 d'accrochage dépassent de l'écarteur et sont au contact l'un de l'autre.

L'agrafe 10 comporte en outre une tige 18 filetée, disposée selon l'axe 12 et mobile par rapport au corps 11. Une extrémité de la tige 18 est fixée aux deux demi-pinces 15.

La tige est munie d'un filetage 25 sur sa surface extérieure. L'écrou de commande 20 comporte sur sa surface intérieure un taraudage 19 apte à coopérer avec le filetage 25 de la tige filetée 18, afin que la tige puisse se déplacer sur la longueur de l'écrou 20. Sur la figure 2, en position « libre », le filetage de la tige 18 n'est pas engagé avec le taraudage 19.

Une extrémité de l'écrou 20 opposée aux demi-pinces 15 est munie d'une portion 21 d'entraînement. La forme extérieure de ladite portion, comportant par exemple des parties planes, permet l'entraînement de l'écrou par un outil de pose. La portion 21 a par exemple une forme à six pans, mais peut avoir d'autres formes.

Par ailleurs, des rondelles ressort 22 sont disposées selon l'axe 12 entre une butée frontale 23 de l'écrou, située à l'extrémité opposée à la portion d'entraînement 21, et une butée 24 interne du corps 11, formée par un fond cylindrique disposé sensiblement perpendiculairement à l'axe 12.

L'écrou 20 comporte en outre un filetage 26 disposé sur le pourtour cylindrique extérieur proche de la butée frontale 23. Ce filetage 26 est court et ne comporte que quelques filets.

A une extrémité 27 opposée au fond 24, le corps 11 comprend un taraudage interne 28, apte à coopérer avec le filetage 26 de l'écrou. Le taraudage 28 comporte également un faible nombre de filets.

Le filetage 25 de la tige filetée et le filetage 26 de l'écrou 20 correspondent à des sens de vissage opposés. Dans cet exemple, le filetage 25 de la tige filetée est dans le sens horaire tandis que le filetage 26 de l'écrou est dans le sens anti-horaire.

Entre la portion annulaire filetée de la butée frontale 23 et la portion d'entraînement 21, l'écrou comprend une portion médiane 29 cylindrique dont le diamètre extérieur est inférieur au plus petit diamètre de la portion taraudée du corps 11. Il existe ainsi un jeu permettant à l'écrou 20 de coulisser et tourner dans le corps 11, sur une course limitée d'un côté par les rondelles ressort 22, et de l'autre côté par l'extrémité 27 comprenant le taraudage 28.

Le filetage 26 de l'écrou et le taraudage 28 du corps ne se trouvent en prise l'un avec l'autre que durant l'assemblage de la fixation temporaire 10. Ledit assemblage est réalisé comme suit. Dans un premier temps, les rondelles ressort 22 sont insérées à l'intérieur du corps 11 jusqu'à entrer en contact avec le fond. Ensuite, la tige filetée 18 munie des deux demi-pinces 15 est insérée dans le corps 11, jusqu'à ce que les demi-pinces 15 traversent les rondelles ressort 22. L'écarteur 17 est inséré entre les demi-pinces et dans une fente réalisée sur une face frontale du corps 11, puis l'embout 13 est clipsé ou vissé sur le corps pour bloquer tout mouvement dudit écarteur. Une face de la tige filetée 18 repose contre les rondelles ressort 22.

L'écrou 20 est vissé manuellement dans le corps 11 dans le sens anti-horaire, en mettant en prise le filetage 26 de l'écrou et le taraudage 28 du corps 11. L'écrou 20 est vissé jusqu'à ce que le filetage 26 ne soit plus en prise avec le taraudage 28.

Grâce au jeu entre la portion médiane 29 de l'écrou et l'extrémité 27 taraudée du corps, l'écrou 20 est poussé à l'intérieur du corps 11 jusqu'à entrer en contact avec la tige filetée 18.

Du fait du jeu positif entre les crêtes des filets du filetage 26 de l'écrou et du taraudage 28 du corps et de l'inversion des pas de filetage, l'écrou ne peut être tiré hors du corps pendant la pose ou la dépose de l'agrafe dans des structures. En effet, l'agrafe 10 ne peut être démontée que manuellement en tirant sur l'écrou 20 de sorte à amener le filetage 26 de l'écrou en contact avec le filetage 28 de l'extrémité 27 du corps, et en vissant le filetage 26 sur le taraudage 28 dans le sens horaire.

Un procédé d'utilisation de l'agrafe 10 sur une structure se déroule par exemple comme suit : l'agrafe 10 est introduite dans un nez de pose (non représenté) qui bloque le corps 11 en translation et en rotation. Le nez de pose est par exemple monté sur un robot qui positionne l'agrafe 10 sur une structure (non représentée), en introduisant les demi-pinces 15 dans un trou traversant de ladite structure.

Le nez de pose est par exemple équipé d'une clé d'entraînement dont la forme est complémentaire de la surface 21 de l'écrou 20. La clé exerce une pression et entraîne l'écrou 20 en rotation selon l'axe 12 dans le sens horaire; l'écrou se déplace alors en translation sur le filetage 25 par rapport au corps 11, de sorte à amener la butée 23 de l'écrou au contact des rondelles ressort 22. Dans cette position, le filetage 26 de l'écrou et le taraudage 28 du corps ne sont pas disposés au contact l'un de l'autre, de sorte qu'ils ne peuvent s'engager. L'écrou 20 reste donc dans le corps 11.

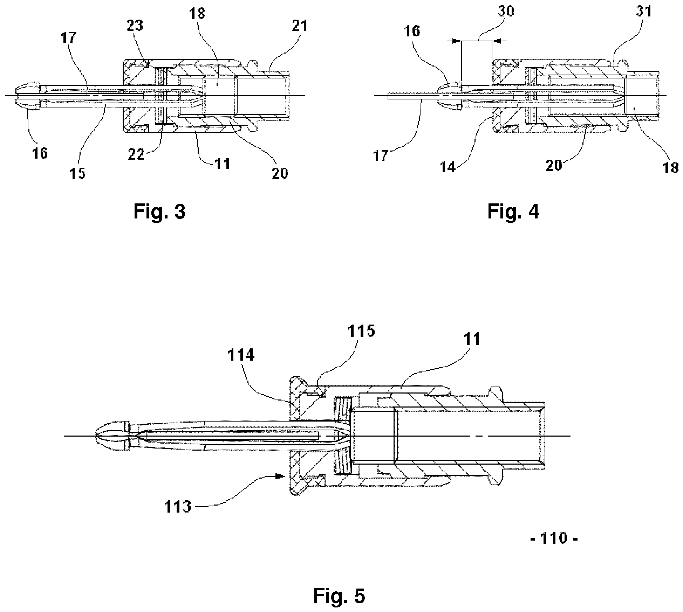

La clé d'entraînement poursuivant la mise en rotation de l'écrou 20, le taraudage 19 de l'écrou engagé avec le filetage 25 de la tige 18, ladite tige progressant alors à l'intérieur de l'écrou en direction de la surface 21, comme représenté à la figure 3.

L'écarteur 17 se retrouve alors entre les becs 16, ces derniers étant alors aptes à venir en butée sur une face de la structure à assembler. Le couple de serrage et l'écrasement des rondelles ressort 22 par l'écrou 20 permet d'appliquer une tension dans les éléments de structure, ladite tension étant préalablement paramétrée au niveau de l'outil de pose.

A la figure 4, la tige 18 est représentée après avoir accompli sa course maximale à l'intérieur de l'écrou 20. L'espacement 30 entre les becs 16 et la face 14 de l'embout 13 indique l'épaisseur minimale d'une structure pouvant être assemblée par l'agrafe 10. Durant la pose de l'agrafe 10, le filetage 26 de l'écrou et le taraudage 28 du corps ne sont jamais disposés en contact l'un avec l'autre, de sorte qu'ils ne peuvent jamais s'engager. L'écrou 20 reste donc dans le corps 11 durant toute la pose.

Pour déposer l'agrafe 10, le nez de pose est avancé jusqu'à ce que la clé vienne au contact de la surface d'entraînement 21 de l'écrou. La clé entraîne alors l'écrou 20 dans un sens anti-horaire, le corps 11 étant maintenu fixe en rotation. Sous l'effet de la rotation exercée, l'écrou 20 coulisse dans le corps 11 jusqu'à ce que le filetage 26 de la butée frontale entre en contact avec le taraudage 28 du corps 11. Du fait de l'inversion de pas, l'écrou entre en appui contre l'extrémité du corps sans que le filetage 26 et le taraudage 28 ne s'engagent. La tige filetée est entraînée vers la butée frontale 23 de l'écrou. Cette progression ramène les becs 16 au-delà de l'écarteur 17 de sorte qu'ils se touchent et reviennent à un diamètre extérieur inférieur au diamètre du trou traversant de la structure.

L'agrafe peut être ôtée du trou et réutilisée ultérieurement.

Du fait de la suppression d'un jonc d'arrêt entre le corps et l'écrou, une telle agrafe 10 est plus compacte que la plupart des dispositifs similaires connus et permet une succession de pose par outillages manuel et/ou robotisé sur une plage de pas plus serrée.

De plus, la forme de l'agrafe présente une gorge de préhension 31 (figure 4), utile pour une coopération avec l'outil en phase d'attente de pose. Cette caractéristique, ainsi que sa forme cylindrique, facilitent son utilisation par un mécanisme robotisé.

En variante, l'agrafe peut ne pas comporter les rondelles ressort 22.

La figure 5 représente une agrafe 110 selon une variante de réalisation de l'invention. L'agrafe 110 comporte les mêmes éléments que l'agrafe 10 décrite ci-dessus, à l'exception de l'embout 13. Plus précisément, l'agrafe 110 comporte un embout 113 comprenant une partie tubulaire 115 de diamètre extérieur identique au corps 11 de l'agrafe 110. L'embout 113 comprend en outre une collerette 114 formant une face d'appui sur une structure. La collerette 114 a la forme d'un disque de diamètre supérieur au diamètre du corps 11. La partie cylindrique 115 comprend sur sa surface intérieure une saillie annulaire qui s'emboite par clipsage dans une rainure annulaire ménagée sur l'extrémité avant du corps 11.

La collerette 114 permet d'assurer un appui franc de l'outil de pose sur l'agrafe et d'améliorer la relocalisation de l'agrafe par vision robot, du fait que la collerette est proche de la structure à assembler.

## Revendications

1. Fixation (10, 110) pour l'assemblage temporaire d'au moins deux structures préalablement percées, du type comprenant :
- un corps (11) s'étendant selon un axe (12), ledit corps étant pourvu d'une face (14, 114) d'appui sensiblement perpendiculaire à l'axe (12), ladite face étant susceptible de venir au contact d'une face avant des structures à assembler,
- un écarteur (17) solidaire dudit corps,
- deux demi-pinces élastiques (15) destinées à traverser les perçages, chaque demi-pince étant pourvue d'un bec (16) d'accrochage susceptible de s'appliquer contre une face arrière des structures à assembler, l'écarteur étant situé entre les deux demi-pinces,
- un mécanisme déplaçable par rapport au corps, ledit mécanisme comprenant une tige (18) filetée disposée coaxialement au corps, une extrémité de ladite tige étant reliée aux demi-pinces, ledit mécanisme comprenant en outre un écrou (20) de commande monté sur ladite tige,
ladite fixation étant **caractérisée en ce que** l'écrou de commande comporte :
- un taraudage (19) interne coopérant avec le filetage (25) de la tige,
- un filetage (26) externe coopérant avec un taraudage (28) interne du corps, le filetage de la tige et le filetage de l'écrou étant de pas inversés.

2. Fixation selon la revendication 1, telle qu'une extrémité de l'écrou est munie d'une portion d'entraînement (21) apte à coopérer avec un outil d'installation pour un entraînement en rotation.

3. Fixation selon la revendication 2, telle que le filetage (26) de l'écrou est disposé sur le pourtour cylindrique extérieur d'une extrémité (23) de l'écrou formant butée, ladite extrémité étant opposée à la portion d'entrainement (21).

4. Fixation selon la revendication 3, telle que des rondelles ressort (22) sont disposées dans le corps (11) entre une surface intérieure du corps (11) disposée sensiblement perpendiculairement à l'axe (12) et la butée (23) de l'écrou (20).

5. Fixation selon l'une des revendications précédentes, telle que le taraudage (28) du corps est disposé sur le pourtour cylindrique intérieur d'une extrémité opposée à la face d'appui (14).

6. Fixation selon l'une des revendications précédentes, telle que l'écrou comporte une portion médiane (29) dont un diamètre extérieur est inférieur au plus petit diamètre du taraudage (28) du corps.

7. Procédé d'assemblage temporaire d'au moins deux structures préalablement percées, comprenant les étapes suivantes :
- une fixation (10, 110) selon l'une des revendications précédentes est installée sur un automate de pose,
- ledit automate insère les deux demi-pinces élastiques dans un perçage des structures à assembler,
- un outil d'entraînement de l'automate entraîne en rotation l'écrou de commande.

## Patentansprüche

1. Befestiger (10, 110) zum zeitweiligen Zusammenbau wenigstens zweier zuvor gebohrter Strukturen, des Typs, welcher umfasst:
- einen Körper (11), der sich entlang einer Achse (12) erstreckt, wobei der Körper mit einer Anlagefläche (14, 114) versehen ist, die im Wesentlichen senkrecht zur Achse (12) ist, wobei diese Fläche in der Lage ist, mit einer Vorderseite der zusammenzubauenden Strukturen in Kontakt zu kommen,
- einen Abstandshalter (17), der mit dem Körper fest verbunden ist,
- zwei elastische Klemmenhälften (15), die dazu bestimmt sind, die Bohrungen zu durchqueren, wobei jede Klemmenhälfte mit einer Rastnase (16) versehen ist, die in der Lage ist, an einer Rückseite der zusammenzubauenden Strukturen zur Anlage zu kommen, wobei sich der Abstandshalter zwischen den zwei Klemmenhälften befindet,
- einen bezüglich des Körpers verschiebbaren Mechanismus, wobei der Mechanismus eine Gewindestange (18) umfasst, die koaxial mit dem Körper angeordnet ist, wobei ein Ende der Stange mit den Klemmenhälften verbunden ist, wobei der Mechanismus außerdem eine Steuermutter (20) umfasst, die auf der Stange angebracht ist,
wobei der Befestiger **dadurch gekennzeichnet ist, dass** die Steuermutter aufweist:
- ein Innengewinde (19), das mit dem Gewinde (25) der Stange zusammenwirkt,
- ein Außengewinde (26), das mit einem Innengewinde (28) des Körpers zusammenwirkt, wobei das Gewinde der Stange und das Gewinde der Mutter entgegengesetzte Steigungen aufweisen.

2. Befestiger nach Anspruch 1, wobei ein Ende der Mutter mit einem Antriebsabschnitt (21) ausgestattet ist, der geeignet ist, mit einem Montagewerkzeug für einen Drehantrieb zusammenzuwirken.

3. Befestiger nach Anspruch 2, wobei das Außengewinde (26) der Mutter auf dem zylindrischen Außenumfang eines Endes (23) der Mutter, das einen Anschlag bildet, angeordnet ist, wobei dieses Ende zu dem Antriebsabschnitt (21) entgegengesetzt ist.

4. Befestiger nach Anspruch 3, wobei Federringe (22) in dem Körper (11) zwischen einer Innenfläche des Körpers (11), die im Wesentlichen senkrecht zu der Achse (12) angeordnet ist, und dem Anschlag (23) der Mutter (20) angeordnet sind.

5. Befestiger nach einem der vorhergehenden Ansprüche, wobei das Innengewinde (28) des Körpers auf dem zylindrischen Innenumfang eines Endes angeordnet ist, das der Anlagefläche (14) gegenüberliegt.

6. Befestiger nach einem der vorhergehenden Ansprüche, wobei die Mutter einen mittleren Abschnitt (29) aufweist, dessen Außendurchmesser kleiner als der kleinste Durchmesser des Innengewindes (28) des Körpers ist.

7. Verfahren zum zeitweiligen Zusammenbau wenigstens zweier zuvor gebohrter Strukturen, welches die folgenden Schritte umfasst:
- ein Befestiger (10, 110) nach einem der vorhergehenden Ansprüche wird auf einem Einbauautomaten angebracht,
- der Automat setzt die zwei elastischen Klemmenhälften in eine Bohrung der zusammenzubauenden Strukturen ein,
- ein Antriebswerkzeug des Automaten treibt die Steuermutter drehend an.

## Claims

1. Fastener (10, 110) for the temporary assembly of at least two pre-drilled structures, comprising the following:
- a body (11) extending along an axis (12), said body having a bearing surface (14, 114) substantially perpendicular to the axis (12), said surface being able to come into contact with a front surface of the structures to be assembled;
- a spacer (17), secured to said body;
- two elastic half-clips (15) designed to pass through the holes, each half-clip having a hooking spur (16) that can be applied to a rear surface of the structures to be assembled, the spacer being located between the two half-clips;
- a mechanism that can be moved relative to the body, said mechanism comprising a threaded rod (18) placed coaxially to the body, with one end of said rod connected to the half-clips, said mechanism also comprising a control nut (20) mounted on said rod;
said fastener being **characterized in that** the control nut comprises:
- an internal tapping (19) cooperating with the thread (25) of the rod;
- an external thread (26) cooperating with an internal tapping (28) of the body;
the pitch of the rod thread and of the nut thread being opposite.

2. Fastener according to claim 1, wherein one extremity of the nut is fitted with a driving portion (21) able to cooperate with an installation tool for driving in rotation.

3. Fastener according to claim 2, wherein the thread (26) of the nut is arranged on the outer cylindrical perimeter of one extremity (23) of the nut forming a stop, said extremity being opposite the driving portion (21).

4. Fastener according to claim 3, wherein spring washers (22) are fitted in the body (11), between an inner surface of the body (11), arranged substantially perpendicular to the axis (12), and the stop (23) of the nut (20).

5. Fastener according to one of the preceding claims, wherein the tapping (28) of the body is arranged on the inner cylindrical perimeter of an extremity opposite the bearing surface (14).

6. Fastener according to one of the preceding claims, wherein the nut comprises a median portion (29) with an outer diameter smaller than the smallest diameter of the tapping (28) of the body.

7. Method for temporarily assembling at least two pre-drilled structures comprising the following steps:
- a fastener (10, 110) according to one of the preceding claims is installed onto an installation machine;
- said machine inserts the two elastic half-clips into a hole in the structures to be assembled;
- a machine drive tool drives the control nut in rotation.
